# EUROPÄISCHE PATENTSCHRIFT

(11) **EP 3 011 621 B1**
(45) Veröffentlichungstag und Bekanntmachung des Hinweises auf die Patenterteilung: **09.11.2016**
(21) Anmeldenummer: 14731232.6
(22) Anmeldetag: 16.06.2014
(51) Int. Cl.: H01M 4/134, H01M 4/1395, H01M 4/38, H01M 4/62, H01M 10/0525

(54) **ELEKTRODENMATERIAL UND DESSEN VERWENDUNG IN LITHIUM-IONEN-BATTERIEN**
ELECTRODE MATERIAL AND USE THEREOF IN LITHIUM ION BATTERIES
MATÉRIAU D'ÉLECTRODE ET SON UTILISATION DANS DES BATTERIES LITHIUM-ION

(30) Priorität: 18.06.2013 DE 102013211388
(43) Veröffentlichungstag der Anmeldung: 27.04.2016
(73) Patentinhaber: Wacker Chemie AG, 81737 München (DE)
(72) Erfinder: HANELT, Eckhard, 82269 Geltendorf (DE); HAUFE, Stefan, 85579 Neubiberg (DE)
(74) Vertreter: Ege, Markus
(86) Internationale Anmeldenummer: PCT/EP2014/062565
(87) Internationale Veröffentlichungsnummer: WO 2014/202529

(56) Entgegenhaltungen:
- EP-A1- 2 387 089
- GB-A- 2 495 951
- US-A1- 2010 285 359
- US-A1- 2011 311 873

## Beschreibung

Die Erfindung betrifft ein Elektrodenmaterial und dessen Verwendung in Lithium-Ionen-Batterien.

In Anoden für Lithium-Ionen-Batterien, in denen das Elektrodenaktivmaterial auf Silicium (als Material mit der höchsten bekannten Speicherkapazität für Lithium-Ionen; 4199 mAh/g) basiert, kann das Silicium beim Laden bzw. Entladen mit Lithium eine extreme Volumenänderung bis ca. 300% erfahren. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interface; SEI), was zu einem irreversiblen Lithium-Verlust führt.

Wiederaufladbare Lithium-Ionen-Batterien sind heute die praktisch verwendbaren elektrochemischen Energiespeicher mit den höchsten Energiedichten von bis zu 180 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern um höhere Reichweiten der Fahrzeuge zu erreichen.

Als negatives Elektrodenmaterial ("Anode") wird vor allem graphitischer Kohlenstoff verwendet. Der graphitische Kohlenstoff zeichnet sich durch seine stabilen Zykleneigenschaften und seine, im Vergleich zu Lithiummetall, das in Lithium-Primärzellen verwendet wird, recht hohe Handhabungssicherheit aus. Ein wesentliches Argument für die Verwendung von graphitischem Kohlenstoff in negativen Elektrodenmaterialien liegt in den geringen Volumenänderungen des Wirtsmaterials, die mit der Ein- und Auslagerung von Lithium verbunden sind, d.h. die Elektrode bleibt annähernd stabil. So lässt sich für die Lithiumeinlagerung in graphitischem Kohlenstoff nur eine Volumenzunahme von ca. 10% für die Grenzstöchiometrie von LiC₆ messen. Nachteilig ist jedoch seine relativ niedrige elektrochemische Kapazität von theoretisch 372 mAh/g Graphit, die nur etwa ein Zehntel der mit Lithiummetall theoretisch erreichbaren elektrochemischen Kapazität entspricht.

Seit langem wird deshalb nach alternativen Materialien geforscht, insbesondere im Bereich der Legierungen. Diese Anodenmaterialien bieten im Vergleich zu metallischem Lithium den Vorteil, dass es nicht zur Dendritenbildung bei der Lithiumabscheidung kommt. Im Gegensatz zu Graphitmaterialien eignen sich Anodenmaterialien auf der Basis von Legierungen für den Einsatz zusammen mit Elektrolyten auf der Basis von Propylencarbonat. Dies ermöglicht die Anwendung von Lithium-Ionen-Batterien bei niedrigen Temperaturen. Der Nachteil dieser Legierungen ist allerdings die große Volumenausdehnung während des Ein- und Auslagerns des Lithiums, die über 200% teilweise sogar bis zu 300% beträgt.

Silicium bildet mit Lithium binäre elektrochemisch aktive Verbindungen, die einen sehr hohen Lithiumgehalt aufweisen. Das theoretische Maximum an Lithiumgehalt findet man bei Li_{4.4}Si, was einer sehr hohen theoretischen spezifischen Kapazität von ca. 4200 mAh/g Silicium entspricht. Wie bei den oben genannten binären Legierungen ist auch im Falle des Siliciums die Ein- und Auslagerung von Lithium mit einer sehr starken Volumenausdehnung verbunden, die bei maximal 300% liegt. Diese Volumenausdehnung führt zu einer starken mechanischen Belastung der Kristallite und dadurch zu einem Auseinanderbrechen der Partikel unter Verlust des elektrischen Kontakts.

Die mechanische Beanspruchung lässt sich deutlich reduzieren, wenn Elektrodenmaterialien verwendet werden, die nanoskalige Siliciumpartikel enthalten. In der Literatur wurden jedoch sehr unterschiedliche Aussagen zur optimalen Größe und Gestalt der nanoskaligen Siliciumpartikel in den Elektrodenmaterialien publiziert. Diese basieren zum Teil auf experimentellen Ergebnissen oder auf theoretischen Berechnungen. In vielen Fällen hing die Beurteilung insbesondere auch davon ab, welche Partikelquellen jeweils für die Herstellung der Elektrodenmaterialien zur Verfügung standen. Es wurden auch Experimente mit Mischungen aus nanoskaligem Silicium und Ruß beschrieben, die eine deutlich verbesserte elektrische Leitfähigkeit der daraus hergestellten Elektroden ergeben und die eine sehr hohe Kapazität von anfänglich bis über 2000 mAh/g zeigen, die jedoch über mehrere Lade- und Entladezyklen deutlich abfällt. Dieser Abfall wird in der Literatur als Fading und irreversibler Kapazitätsverlust bezeichnet.

EP 1730800 B1 offenbart ein Elektrodenmaterial für Lithium-Ionen-Batterien, dadurch gekennzeichnet, dass das Elektrodenmaterial 5-85 Gew.% nanoskalige Siliciumpartikel, die eine BET-Oberfläche von 5 bis 700 m2/g und einen mittleren Primärpartikeldurchmesser von 5 bis 200 nm aufweisen, - 0-10 Gew.% Leitruß, 5-80 Gew.% Graphit mit einem mittleren Partikeldurchmesser von 1 µm bis 100 µm und 5-25 Gew.% eines Bindemittels aufweist, wobei die Anteile der Komponenten in Summe maximal 100 Gew.% ergeben.

EP 1859073 A1 offenbart ein Verfahren zur Herstellung von beschichteten Kohlenstoffpartikeln, dadurch gekennzeichnet, dass elektrisch leitfähige Kohlenstoffpartikel in einem Reaktionsraum durch chemische Gasphasenabscheidung aus zumindest einem gasförmigen Silan in einer sauerstofffreien Gasatmosphäre mit elementarem dotiertem oder undotiertem Silicium beschichtet werden, wobei die elektrisch leitfähigen Kohlenstoffpartikel während der Gasphasenabscheidung ständig in Bewegung sind.

Diese beschichteten Kohlenstoffpartikel können zusammen mit Graphitpartikeln, Bindemittel und einem Leitfähigkeitsverbesserer ein Anodenmaterial bilden.

EP 2364511 A1 offenbart ein Verfahren zur Herstellung von Aktivmaterial für die Elektrode eines elektrochemischen Elements, umfassend die Schritte
- Bereitstellen von Kohlenstoffpartikeln,
- Aufbringen eines Silicium-Präkursors auf die Oberfläche der Kohlenstoffpartikel,
- thermisches Zersetzen des Silicium-Präkursors unter Bildung von metallischem Silicium.

Das elektrochemische Aktivmaterial, insbesondere für die negative Elektrode eines elektrochemischen Elements, umfasst Kohlenstoffpartikel, deren Oberfläche mindestens teilweise mit einer Schicht aus Silicium, insbesondere einer Schicht aus amorphem Silicium, bedeckt ist.

EP2573845 A1 beschreibt ein Verfahren zur Herstellung von Aktivmaterial für die Elektrode einer elektrochemischen Zelle, umfassend die Schritte
- Bereitstellen von Lithium interkalierenden Kohlenstoffpartikeln mit einer mittleren Partikelgröße zwischen 1 µm und 100 µm als Komponente 1,
- Bereitstellen von Siliciumpartikeln mit einer mittleren Partikelgröße zwischen 5 nm und 500 nm als Komponente 2,
- Bereitstellen eines zu amorphem Kohlenstoff pyrolisierbaren Polymers oder Polymervorläufers als Komponente 3,
- Mischen der Komponenten 1 bis 3 und
- Wärmebehandlung der Mischung unter Ausschluss von Luftsauerstoff bei einer Temperatur, bei der sich das pyrolisierbare Polymer oder der pyrolisierbare Polymervorläufer unter Bildung von amorphem Kohlenstoff zersetzt.

Das hergestellte elektrochemische Aktivmaterial, insbesondere für die negative Elektrode einer elektrochemischen Zelle, umfasst Lithium interkalierende Kohlenstoffpartikel, deren Oberfläche mindestens teilweise mit einer Schicht aus amorphem Kohlenstoff bedeckt ist, wobei in die Schicht Siliciumpartikel mit einer mittleren Partikelgröße zwischen 5 nm und 500 nm eingelagert sind.

JP 2003109590 A2 offenbart ein negatives Elektrodenmaterial, enthaltend polykristallines Siliciumpulver, das mit Phosphor, Bor oder Aluminium dotiert ist.

WO 13040705 A1 offenbart ein Verfahren zur Herstellung von partikulärem Material zur Verwendung in Anoden, umfassend Trockenvermahlung von Partikeln aus einem Element der Kohlenstoff-Silicium-Gruppe zu mikroskaligen Partikeln, Nassvermahlung der in einem Lösungsmittel dispergierten mikroskaligen Partikel zu nanoskaligen Partikeln (10 - 100 nm). Es ist vorgesehen, die Nanopartikel mit einem Kohlenstoff-Präkursor zu mischen, die Mischung zu pyrolisieren, um so die Nanopartikel zumindest teilweise mit leitfähigem Kohlenstoff zu beschichten.

Ein seit langem bekanntes Verfahren zur Herstellung von Si-Nanopartikeln ist die Nassvermahlung einer Suspension aus Si-Partikeln in organischen Lösemitteln mit Hilfe einer Rührwerkskugelmühle (T. P. Herbell, T. K. Glasgow and N. W. Orth, "Demonstration of a silicon nitride attrition mill for production of fine pure Si and Si3N4 powders"; Am. Ceram. Soc. Bull., 1984, 63, 9, S. 1176). In dieser Veröffentlichung wird bereits beschrieben, daß beim Mahlen Reaktionen des Mahlguts mit der Suspensionsflüssigkeit stattfinden können.

In US 7883995 B2 wird ein Verfahren zur Herstellung stabiler funktionalisierter Nanopartikel kleiner als 100 nm beansprucht, wobei die Partikel beim Mahlen in einem reaktiven Medium in einer Kugelmühle funktionalisiert werden. Zur Funktionalisierung der Partikeloberfläche werden insbesondere Alkene verwendet, weil die Doppelbindungen besonders leicht mit offenen Bindungen an den Bruchflächen der Partikel reagieren können.

EP 1102340 A2 offenbart ein Verfahren zur Herstellung von Anodenmaterial enthaltend Silicium, umfassend Brechen von Silicium in einer Atmosphäre mit einem Sauerstoffpartialdruck von mehr als 10 Pa und der geringer ist als der Sauerstoffpartialdruck von Luft.

US 2011/311873 beschreibt Anodenmaterialien für **Lithiumionen-)** Batterien basierend auf nanoskaligen Siliciumpartikeln, Leitruß, Graphitpartikeln und Bindemittel.

Aufgabe der vorliegenden Erfindung war es, ein Elektrodenmaterial bereitzustellen, das eine hohe reversible Kapazität aufweist, wobei vorzugsweise gleichzeitig ein geringfügiges Fading und/oder geringere irreversible Kapazitätsverlusten bei dem ersten Zyklus erreicht werden sollte.

Insbesondere war es die Aufgabe, ein Elektrodenmaterial zur Verfügung zu stellen, das eine ausreichende mechanische Stabilität während des wiederholten Auf- und Entladens aufweist.

Unter Fading wird im Sinne dieser Erfindung der Rückgang der reversiblen Kapazität während des fortgesetzten Zyklens verstanden.

Überraschenderweise wurde gefunden, dass ein Elektrodenmaterial, das nanoskalige Siliciumpartikel enthält, **die Bruchflächen und eine Sphärizität von 0,3 < ψ < 0,9 aufweisen,** die nicht aggregiert sind und deren volumengewichtete Partikelgrößenverteilung zwischen den Durchmesser-Perzentilen d₁₀ > 20 nm und d₉₀ < 2000 nm liegt und eine Breite d₉₀-d₁₀ < 1200 nm hat, zu einem guten Zyklenverhalten führt, insbesondere im Vergleich zu siliciumbasierten negativen Elektroden für Lithium-Ionen-Batterien gemäß dem Stand der Technik.

Die Lösung der Aufgabe war umso überraschender, zumal sich zeigte, dass diese Elektroden eine sehr hohe reversible Kapazität aufweisen, die auch im Laufe des Zyklens annähernd konstant bleibt, so dass nur ein geringfügiges Fading zu beobachten ist. Ferner zeigte sich, dass durch den Einsatz dieser nanoskaligen Siliciumpartikel das Elektrodenmaterial eine deutlich verbesserte mechanische Stabilität aufweist.

Ebenfalls überraschend war, dass der irreversible Kapazitätsverlust während des ersten Zyklus verringert werden konnte. Dies ist - wie sich aus den Beispielen und Vergleichsbeispielen ergibt - auf die Verwendung von nicht-aggregierten Siliciumpartikeln im Elektrodenmaterial zurückzuführen.

Um diese verbesserten Eigenschaften dauerhaft zu erreichen, ist es notwendig, die erforderliche Breite der Partikelgrößenverteilungen zu definieren. Dies wird durch die hier spezifizierten Perzentilwerte d₁₀ und d₉₀ der Partikelgrößenverteilungen erreicht, nicht jedoch durch die üblicherweise angegebenen BET-Werte und mittleren Partikeldurchmesser.

Für die Schichtdicke einer Elektrode ist der Perzentilwert d₉₀ besonders relevant, weil dieser die minimale Elektrodendicke bestimmt. Zu große Partikel können zu Kurzschlüssen zwischen negativer und positiver Elektrode führen. Zu kleine Partikel tragen weniger zur Elektrodenkapazität bei.

Die Aufgabe der Erfindung wurde gelöst durch ein Elektrodenmaterial für eine Lithium-Ionen-Batterie nach einem der Ansprüche 1 bis 6, deren Verwendung in einer Lithium-Ionen-Batterie und durch eine Lithium-Ionen-Batterie mit einer negativen Elektrode, die das erfindungsgemäße Elektrodenmaterial aufweist.

Elektroden, bei denen das erfindungsgemäße Elektrodenmaterial verwendet wird, weisen eine sehr hohe reversible Kapazität auf. Dies gilt sowohl für das erfindungsgemäße Elektrodenmaterial mit einem hohen Gehalt an nanoskaligen Siliciumpartikeln als auch für das erfindungsgemäße Elektrodenmaterial mit einem geringeren Gehalt an nanoskaligen Siliciumpartikeln.

Diese reversible Kapazität bleibt auch im Laufe des Zyklens annähernd konstant, so dass nur ein geringfügiges Fading zu beobachten ist.

Ferner weist das erfindungsgemäße Elektrodenmaterial eine gute Stabilität auf. Dies bedeutet, dass auch bei längeren Zyklen kaum Ermüdungserscheinungen, wie beispielsweise mechanische Zerstörung des erfindungsgemäßen Elektrodenmaterials auftreten.

Der irreversible Kapazitätsverlust während des ersten Zyklus kann bei der Verwendung des erfindungsgemäßen Elektrodenmaterials gegenüber entsprechenden siliciumhaltigen und auf Legierungen basierenden Elektrodenmaterialen für Lithium-Ionen-Batterien gemäß dem Stand der Technik verringert werden. Generell zeigt das erfindungsgemäße Elektrodenmaterial ein gutes Zyklenverhalten.

Unter Elektrodenmaterial wird im Sinne dieser Erfindung ein Stoff oder eine Mischung aus zwei oder mehreren Stoffen verstanden, der/die es erlaubt, durch Oxidations- und/oder Reduktionsreaktionen elektrochemische Energie in einer Batterie zu speichern. Je nachdem, ob die elektrochemische Reaktion, welche in der geladenen Batterie Energie liefert eine Oxidation oder Reduktion ist, spricht man von negativem oder positivem Elektrodenmaterial oder auch von Anoden- oder Kathodenmaterial.

Das erfindungsgemäße Elektrodenmaterial besteht aus einer vorzugsweise homogenen Mischung der nicht aggregierten Siliciumpartikel, Graphit, einer nanoskaligen elektrisch leitenden Komponente, einem Bindemittel und ggf. weiteren Komponenten bzw. Hilfsstoffen wie Porenbildner, Dispergiermittel oder Dotiermittel (z.B. elementares Lithium).

Die nicht aggregierten Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen.

Bevorzugt wird elementares Silicium eingesetzt, da dieses die höchste Speicherkapazität für Lithiumionen aufweist.

Unter elementarem Silicium ist hochreines Polysilicium, mit geringem Anteil an Fremdatomen (wie beispielsweise B, P, As) gezielt dotiertes Silicium, aber auch metallurgisches Silicium, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiOₓ bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn die nicht aggregierten Siliciumpartikel mit einem Alkalimetall M legiert sind, dann liegt die Stöchiometrie der Legierung MₓSi bevorzugt im Bereich 0 < x < 5.

Besonders bevorzugt sind nicht aggregierte nanoskaligen Siliciumpartikel die im Inneren mehr als 80 mol% Silicium und weniger als 20 mol% Fremdatome, ganz besonders bevorzugt weniger als 10 mol% Fremdatome enthalten.

Die Oberfläche der nanoskaligen Siliciumpartikel kann dagegen abhängig vom Herstellungsprozess durch eine Oxidschicht oder durch andere anorganische und organische Gruppen abgedeckt sein.

Besonders bevorzugte nicht aggregierte nanoskalige Siliciumpartikel tragen auf der Oberfläche Si-OH- oder Si-H-Gruppen oder kovalent angebundene organischen Gruppen wie beispielsweise Alkohole oder Alkene.

Die nicht aggregierten nanoskaligen Siliciumpartikel können nach den bekannten Verfahren der Gasphasenabscheidung oder durch Mahlprozesse hergestellt werden.

Durch Gasphasenprozesse hergestellte Nanopartikel haben typischerweise eine runde oder nadelförmige Gestalt.

Dagegen weisen die durch Mahlprozesse hergestellten Partikel Bruchflächen, teils scharfkantige Bruchflächen, auf. Sie sind typischerweise splitterförmig.

Die Sphärizität ψ nach der Definition von Wadell ist das Verhältnis aus der Oberfläche einer Kugel gleichen Volumens zur tatsächlichen Oberfläche eines Körpers.

Die durch Mahlprozesse hergestellten splitterförmigen Siliziumpartikel haben eine Sphärizität von typischerweise 0,3 < ψ < 0,9.

Bevorzugt haben die Siliziumpartikel eine Sphärizität von 0,5 < ψ < 0,85, besonders bevorzugt von 0,65 < ψ < 0,85.

Die internationale Norm der "Federation Europeenne de la Manutention" gibt in der FEM 2.581 einen Überblick, unter welchen Gesichtspunkten ein Schüttgut zu betrachten ist. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in 6 unterschiedliche Kornformen untergliedert werden:
I Scharfe Kanten mit ungefähr gleichen Ausmaßen in den drei Dimensionen (Bsp.: Würfel)
II Scharfe Kanten, deren eine deutlich länger ist als die anderen beiden (Bsp.: Prisma, Klinge)
III Scharfe Kanten, deren eine deutlich kleiner ist als die beiden anderen (Bsp.: Platte, Schuppen)
IV Runde Kanten mit ungefähr gleichen Ausmaßen in den drei Dimensionen (Bsp.: Kugel)
V Runde Kanten, in einer Richtung deutlich größer als in den anderen beiden (Bsp.: Zylinder, Stange)
VI Faserig, fadenförmig, lockenförmig, verschlungen

Gemäß dieser Klassifizierung von Schüttgütern handelt es sich bei den durch Mahlprozesse hergestellten Siliciumpartikeln vorzugweise um Partikel der Kornformen I, II oder III.

In der Literatur wurden bisher unterschiedliche Aussagen zur optimalen Größe der nanoskaligen Siliciumpartikel in einem Elektrodenmaterial publiziert. In vielen Fällen hing die Beurteilung davon ab, welche Partikelquellen jeweils für die Herstellung der Elektroden zur Verfügung standen. Bei der Gasphasenabscheidung werden typischerweise Partikel produziert, deren Durchmesser kleiner als 100 nm ist, wogegen bei der Mahlung der Bereich über 100 nm besser zugänglich ist.

Die im Rahmen der Erfindung verwendeten Siliciumpartikel sind nicht aggregiert, wobei ihre volumengewichtete Partikelgrößenverteilung zwischen den Durchmesser-Perzentilen d₁₀ > 20 nm und d₉₀ < 2000 nm liegt und eine Breite d₉₀-d₁₀ < 1200 nm hat.

Besonders bevorzugt liegt die Partikelgrößenverteilung zwischen d₁₀ > 30 nm und d₉₀ < 1000 nm und hat eine Breite d₉₀-d₁₀ < 600 nm, ganz besonders bevorzugt sind d₁₀ > 40 nm bis d₉₀ < 500 nm und d₉₀-d₁₀ < 300 nm.

Um bei der Gasphasenabscheidung die Aggregation der Partikel zu vermeiden, dürfen nur geringe Gaskonzentrationen oder Verweilzeiten im Reaktor verwendet werden, so dass die Ausbeute an nicht aggregierten nanoskaligen Siliciumpartikel typischerweise deutlich geringer ist als bei üblichen Gasphasenprozessen im technischen Maßstab.

Um hohe Ausbeuten und damit eine ausreichende Wirtschaftlichkeit des Herstellverfahrens zu erreichen, werden die nicht aggregierten nanoskaligen Siliciumpartikel daher bevorzugt durch Mahlprozesse hergestellt.

Für die Verwendung in einem Elektrodenmaterial sind an der Oberfläche durch kovalent angebundene organische Gruppen funktionalisierte Si-Nanopartikel besonders geeignet, weil die Oberflächenspannung der Partikel durch eine entsprechende Funktionalisierung optimal an die für die Herstellung der Elektrodenbeschichtungen verwendeten Lösemittel und Binder angepasst werden kann.

Zur Mahlung der nanoskaligen Siliciumpartikel in einer Suspension können verschiedene organische oder anorganische Flüssigkeiten oder flüssige Gemische mit einer Viskosität bei Raumtemperatur bevorzugt unter 100 mPas und besonders bevorzugt unter 10 mPas verwendet werden.

Bevorzugt ist die Flüssigkeit inert oder schwach reaktiv gegenüber Silicium.

Besonders bevorzugt ist die Flüssigkeit organisch und enthält weniger als 5% Wasser, besonders bevorzugt weniger als 1% Wasser.

Bevorzugt enthalten die Flüssigkeiten polare Gruppen. Besonders bevorzugt sind Alkohole.

Bei der Herstellung der nicht aggregierten nanoskaligen Siliciumpartikel durch Nassvermahlung in einer Suspension werden vorzugsweise Mahlkörper verwendet, deren mittlerer Durchmesser 10 bis 1000 mal größer ist als der d₉₀ -Wert der Verteilung des eingesetzten Mahlguts. Besonders bevorzugt sind Mahlkörper, deren mittlerer Durchmesser 20 bis 200-mal größer ist als der d₉₀ -Wert der Ausgangsverteilung des Mahlguts.

Um die Übergangswiderstände innerhalb der Elektrode und zwischen Elektrode und Stromableiter zu reduzieren, enthält das erfindungsgemäße Elektrodenmaterial 0 - 40 Gew.% einer elektrisch leitfähigen Komponente mit nanoskaligen Strukturen < 800 nm enthalten. Bevorzugt enthält das Elektrodenmaterial 0 - 30 Gew.% besonders bevorzugt 0 - 20 Gew.% dieser elektrisch leitfähigen Komponente.

Eine bevorzugte elektrisch leitfähige Komponente mit nanoskaligen Strukturen ist ein Leitruß, der Primärpartikel mit einer volumengewichteten Partikelgrößenverteilung zwischen den Durchmesser-Perzentilen d₁₀ = 5 nm und d₉₀ = 200 nm enthält, die kettenartig verzweigt sein und bis zu µm-große Strukturen bilden können.

Eine andere bevorzugte elektrisch leitfähige Komponente mit nanoskaligen Strukturen sind Kohlenstoff-Nanoröhrchen mit einem Durchmesser von 0,4 bis 200 nm.

Besonders bevorzugte Kohlenstoff-Nanoröhrchen haben einen Durchmesser von 2 bis 100 nm, ganz besonders bevorzugt sind Durchmesser von 5 bis 30 nm.

Beim Einsatz von Kohlenstoff-Nanoröhrchen als elektrisch leitfähige Komponente im Elektrodenmaterial muss darauf geachtet werden, dass diese vor der Verwendung in einer Elektrodentinte oder -paste sehr gut in einem geeigneten Lösemittel dispergiert werden, damit sich diese gleichmäßig im Elektrodenmaterial und insbesondere auf der Oberfläche der Si-Nanopartikel verteilen.

Eine dritte bevorzugte elektrisch leitfähige Komponente sind metallische Nanopartikel mit einer volumengewichteten Partikelgrößenverteilung, die zwischen den Durchmesser-Perzentilen d₁₀ = 5 nm und d₉₀ = 800 nm liegt. Besonders bevorzugte metallische Nanopartikel enthalten Kupfer.

Bevorzugte Bindemittel sind Polyvinylidenfluorid, Polytetrafluorethylen, Polyolefine, oder thermoplastische Elastomere, insbesondere Ethylen / Propylen-Dien-Terpolymere. In einer besonderen Ausführungsform handelt es sich um modifizierte Zellulose als Bindemittel.

Die Verarbeitung der Komponenten des erfindungsgemäßen Elektrodenmaterials zu einer Elektrodentinte bzw. -paste kann in einem Lösungsmittel, wie Wasser, Hexan, Toluol, Tetrahydrofuran, N-Methyl-pyrrolidon, N-Ethyl-pyrrolidon, Aceton, Ethylacetat, Dimethylsulfoxid, Dimethylacetamid oder Ethanol, oder Lösungsmittelgemischen unter Verwendung von Rotor-Stator-Maschinen, Hochenergiemühlen, Planetenkneter, Rührwerkskugelmühlen, Rüttelplatten oder Ultraschallgeräten erfolgen.

Die Elektrodentinte oder -paste wird bevorzugt in einer Trockenschichtdicke von 2 µm bis 500 µm, besonders bevorzugt von 10 µm bis 300 µm auf eine Kupferfolie oder einen anderen Stromsammler aufgerakelt.

Andere Beschichtungsverfahren, wie Rotationsbeschichtung (Spin-Coating), Tauchbeschichtung, Streichen, oder Sprühen, können ebenso verwendet werden.

Vor dem Beschichten der Kupferfolie mit dem erfindungsgemäßen Elektrodenmaterial kann eine Behandlung der Kupferfolie mit einem handelsüblichen Primer, z.B. auf der Basis von Polymerharzen erfolgen. Er erhöht die Haftung auf dem Kupfer, besitzt aber selbst praktisch keine elektrochemische Aktivität.

Das Elektrodenmaterial wird bis zur Gewichtskonstanz getrocknet. Die Trocknungstemperatur richtet sich nach den eingesetzten Komponenten und dem verwendeten Lösungsmittel. Sie liegt bevorzugt zwischen 20°C und 300°C, besonders bevorzugt zwischen 50°C und 150°C.

Gegenstand der vorliegenden Erfindung ist eine Lithium-Ionen-Batterie mit einer negativen Elektrode enthaltend das erfindungsgemäße Elektrodenmaterial.

Eine solche Lithium-Ionen-Batterie umfasst eine erste Elektrode als Kathode, eine zweite Elektrode als Anode, eine zwischen beiden Elektroden angeordnete Membran als Separator, zwei Anschlüsse an den Elektroden, ein die genannten Teile aufnehmendes Gehäuse sowie einen Lithium-Ionen enthaltenden Elektrolyten, mit dem die beiden Elektroden getränkt sind, wobei ein Teil der zweiten Elektrode das erfindungsgemäße Elektrodenmaterial enthält.

Als bevorzugte Kathodenmaterialien können Li-Folie, Lithiumcobaltoxid, Lithiumnickeloxid, Lithiumnickelcobaltoxid (dotiert und nicht dotiert), Lithiummanganoxid (Spinell), Lithiumnickelcobaltmanganoxide, Lithiumnickelmanganoxide, Lithiumeisenphosphat, Lithiumcobaltphosphat, Lithiummanganphosphat, Lithiumvanadiumphosphat, oder Lithiumvanadiumoxide eingesetzt werden.

Der Separator ist eine elektrisch isolierende, für Ionen durchlässige Membran, wie sie in der Batterieherstellung bekannt ist. Der Separator trennt die erste Elektrode von der zweiten Elektrode.

Der Elektrolyt ist eine Lösung eines Lithiumsalzes (= Leitsalz) in einem aprotischen Lösungsmittel. Einsetzbare Leitsalze sind zum Beispiel Lithiumhexafluorophosphat, Lithiumhexafluoroarsenat, Lithiumperchlorat, Lithiumtetrafluoroborat, LiCF3SO3, LiN(CF3SO2) oder Lithiumborate.

Die Konzentration des Leitsalzes liegt vorzugsweise zwischen 0,5 mol/l und der Löslichkeitsgrenze des entsprechenden Salzes. Besonders bevorzugt beträgt sie 0,8 mol/l bis 1,2 mol/l.

Als Lösungsmittel können cyclische Carbonate, Propylencarbonat, Ethylencarbonat, Dimethylcarbonat, Diethylcarbonat, Ethylmethylcarbonat, Dimethoxyethan, Diethoxyethan, Tetrahydrofuran, 2-Methyltetrahydrofuran, gamma-Butyrolacton, Dioxolan, Acetonitril, org. Kohlensäureester oder Nitrile, einzeln oder als Mischungen daraus, eingesetzt werden.

Bevorzugt enthält der Elektrolyt einen Filmbildner, wie Vinylencarbonat, Fluorethylencarbonat, etc., wodurch eine signifikante Verbesserung der Zyklenfestigkeit der Si-Kompositelektrode erreicht werden kann. Dies wird hauptsächlich der Bildung einer festen Elektrolytzwischenphase auf der Oberfläche von aktiven Partikeln zugeschrieben. Der Anteil des Filmbildners im Elektrolyten beträgt zwischen 0,1 Gew.% und 20,0 Gew.%, bevorzugt zwischen 0,2 Gew.% und 15,0 Gew.%, besonders bevorzugt zwischen 0,5 Gew.% und 10 Gew.%.

Um die faktischen Kapazitäten der Elektroden einer Lithiumionen-Zelle möglichst optimal aufeinander abzustimmen, wird versucht, die Materialien für die positive und negative Elektrode mengenmäßig auszubalancieren. Von besonderer Bedeutung ist in diesem Zusammenhang, dass es beim ersten bzw. initialen Lade-/Entladezyklus von sekundären Lithiumionen-Zellen (der sogenannten Formierung) zur Ausbildung einer Deckschicht auf der Oberfläche der elektrochemisch aktiven Materialien in der Anode kommt. Diese Deckschicht wird als "Solid Elektrolyte Interphase" (SEI) bezeichnet und besteht in der Regel vor allem aus Elektrolytzersetzungsprodukten sowie einer gewissen Menge an Lithium, das entsprechend für weitere Lade-/Entladereaktionen nicht mehr zur Verfügung steht.

Üblicherweise kommt es im Rahmen des ersten Ladeschrittes, abhängig von der Art und der Qualität des verwendeten Aktivmaterials und der verwendeten Elektrolytlösung, zu einem Verlust von etwa 10 % bis 35 % des mobilen Lithiums. Um diese Prozentzahl sinkt auch die erzielbare reversible Kapazität. Diese Formierungsverluste müssen bei der Ausbalancierung von Anode und Kathode berücksichtigt werden.

Negative Elektroden mit dem erfindungsgemäßen Elektrodenmaterial zeichnen sich dadurch aus, dass der initiale Verlust an mobilem Lithium geringer ist als 30 % der reversiblen Kapazität im ersten Zyklus, bevorzugt kleiner als 20 %, besonders bevorzugt kleiner als 10 %.

Die erfindungsgemäße Lithiumionenbatterie kann in allen üblichen Formen in gewickelter, gefalteter oder gestapelter Form hergestellt werden.

Alle zur Herstellung der erfindungsgemäßen Lithiumionenbatterie, wie oben beschrieben, benutzten Stoffe und Materialien sind bekannt. Die Herstellung der Teile der erfindungsgemäßen Batterie und ihre Zusammenfügung zur erfindungsgemäßen Batterie erfolgt nach den auf dem Gebiet der Batterieherstellung bekannten Verfahren.

Die Erfindung wird nachfolgend anhand von **Beispielen** und den **Fig. 1-7** erläutert.

### Kurzbeschreibung der Figuren

**Fig. 1** zeigt die REM-Aufnahme einer Pulverprobe aus gemahlenen Si-Partikeln
**Fig. 2** zeigt die Abhängigkeit der Lade- und Entladekapazität der Elektrodenbeschichtung in Abhängigkeit von der Zyklenzahl
**Fig. 3** zeigt die REM-Aufnahme einer erfindungsgemäßen Elektrodenbeschichtung
**Fig. 4** zeigt die REM-Aufnahme einer erfindungsgemäßen Elektrodenbeschichtung nach dem ersten Lade-/Entladezyklus.
**Fig. 5** zeigt die Abhängigkeit der Lade- und Entladekapazität einer erfindungsgemäßen Elektrodenbeschichtung in Abhängigkeit von der Zyklenzahl
**Fig. 6** zeigt die REM-Aufnahme von aggregierten Si-Nanopartikeln
**Fig. 7** zeigt die Abhängigkeit der Lade- und Entladekapazität einer Elektrodenbeschichtung enthaltend aggregierte Si-Nanopartikeln in Abhängigkeit von der Zyklenzahl

### Beispiele

**Beispiel 1** bezieht sich auf die Herstellung von splitterförmigen nanoskaligen Siliciumpartikeln durch Mahlung.

Es wurde eine Mischung aus 79 g Ethanol (Reinheit 99%) und 50 g eines Mahlfeinstaubs aus reinem Silicium mit einer Partikelverteilung mit d₁₀ = 13 µm, d₅₀ = 59 µm und d₉₀ = 140 µm, der im industriellen Maßstab nach dem Stand der Technik mit einer Fließbettstrahlmühle aus gröberen Siliciumpartikeln erzeugt werden kann, hergestellt. Diese Mischung wurde 20 min gerührt, bis der gesamte Feststoff in der Suspension fein verteilt vorlag. In einen mit Zirkonoxid ausgekleideten 250 ml-Mahlbecher wurden 93 ml Yttriumoxid-stabilisierte Zirkonoxid-Mahlperlen mit einem mittleren Durchmesser von 0,8 - 1 mm eingefüllt. Anschließend wurde die Suspension aus Siliciumstaub und Ethanol in den Mahlbecher gegossen und der Mahlbecher unter Stickstoff als Schutzgas fest verschlossen. Der Mahlbecher wurde in eine Retsch Planetenkugelmühle PM 100 eingesetzt und dann 240 min mit einer Drehzahl von 400 U/min bewegt. Nach dem Mahlvorgang wurde der Mahlbecher in ein Sieb mit 0,5 mm Maschenweite entleert, um die Suspension mit den gemahlenen Si-Partikeln von den Mahlperlen zu trennen. Dazu wurde Ethanol zugesetzt, so dass die Feststoffkonzentration der Suspension anschließend 18,7 Gew.% betrug.

Die Messung der Partikelverteilung durch statische Laserstreuung mit einem Horiba LA 950 ergab d₁₀ = 120 nm, d₅₀ = 190 nm und d₉₀ = 290 nm in einer stark verdünnten Suspension in Ethanol. Ca. 5 ml der Suspension wurden 16 h in einem Vakuumtrockenschrank bei 120°C und 20 mbar getrocknet.

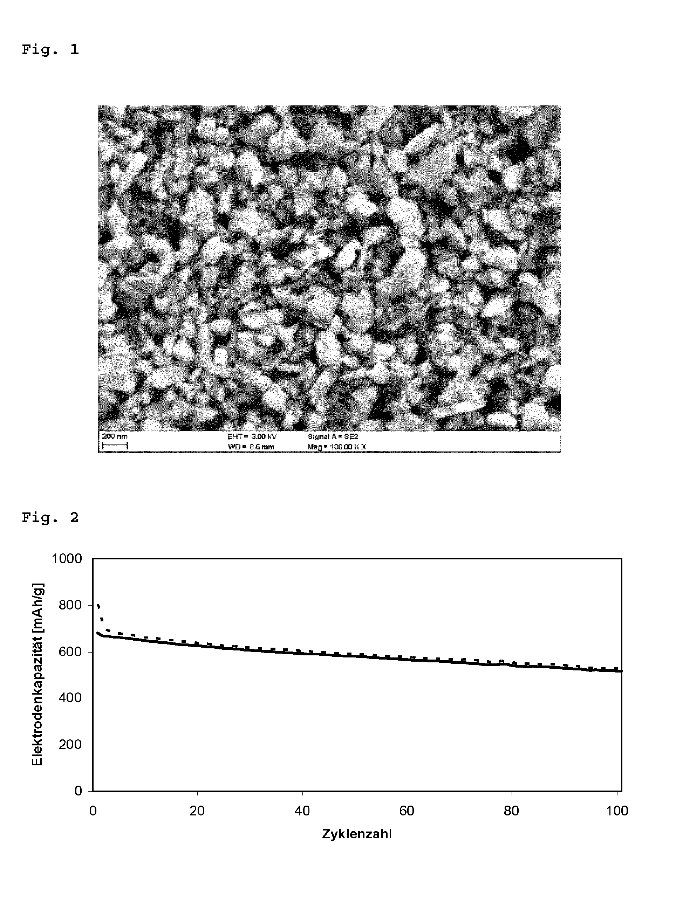

Die REM-Aufnahme des trockenen Si-Staubs in **Fig. 1** zeigt, dass die Probe aus einzelnen, nicht aggregierten, splitterförmigen Partikeln besteht.

Ein Teil des trockenen Si-Staubs wurde mit einem Diamantstempel zu einem Pressling verarbeitet. Die Infrarot-Absorption dieses Presslings wurde in einem FTIR-Spektrometer vermessen. Das Absorptionsspektrum zeigt eine ausgeprägte Bande bei 1100 cm⁻¹, die charakteristisch für Si-O-C-Bindungen ist. Daraus folgt, dass Ethanol kovalent an der Si-Oberfläche angebunden ist. Durch **Beispiel 2** wird die Herstellung von Elektroden mit dem Material aus **Beispiel 1,** Graphit, Leitruß und Binder durch physikalische Mischung erläutert.

4,28 g der 18,7 Gew.% Si-Suspension in Ethanol nach Beispiel 1 und 0,48 g Leitruß (Timcal, Super P Li) wurden in 24,32 g einer 1,3 Gew.% Lösung von Natrium-Carboxymethylcellulose (Daicel, Grade 1380) in Wasser mittels Dissolver bei einer Umlaufgeschwindigkeit von 4,5 m/s für 15 min unter Kühlung bei 20°C dispergiert. Nach Zugabe von 2,41 g Graphit (Timcal, SFG6) wurde dann 45 min bei einer Umlaufgeschwindigkeit von 17 m/s gerührt. Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C und 1 bar Luftdruck getrocknet. Das mittlere Flächengewicht der trockenen Elektrodenbeschichtung betrug 0,90 mg/cm².

**Beispiel 3** betrifft die Testung von Elektroden aus **Beispiel 2.**

Die elektrochemischen Untersuchungen wurden an einer Halbzelle in Drei-Elektroden-Anordnung (stromlose Potentialmessung) durchgeführt. Die Elektrodenbeschichtung aus **Beispiel 2** wurde als Arbeitselektrode eingesetzt, Lithium-Folie (Rockwood Lithium, Dicke 0,5mm) als Referenz- und Gegenelektrode verwendet. Ein mit 100 µl Elektrolyt getränkter, 6-lagiger Vliesstoffstapel (Freudenberg Vliesstoffe, FS2226E) diente als Separator. Der verwendete Elektrolyt bestand aus einer 1-molaren Lösung von Lithiumhexafluorophosphat in einem 3:7 (v/v) Gemisch von Ethylencarbonat und Diethylcarbonat, welche mit 2 Gew.% Vinylencarbonat versetzt war. Der Bau der Zelle erfolgte in einer Glovebox (< 1 ppm H₂O, O₂), der Wassergehalt in der Trockenmasse aller verwendeten Komponenten lag unterhalb von 20 ppm.

Die elektrochemische Testung wurde bei 20°C durchgeführt. Als Potentialgrenzen wurden 40 mV und 1,0 V vs. Li/Li⁺ verwendet. Das Laden bzw. Lithiieren der Elektrode erfolgte im cc/cv-Verfahren (constant current / constant voltage) mit konstantem Strom und nach Erreichen der Spannungsgrenze mit konstanter Spannung bis Unterschreiten eines Stroms von 50 mA/g. Das Entladen bzw. Delithiieren der Elektrode erfolgte im cc-Verfahren (constant current) mit konstantem Strom bis Erreichen der Spannungsgrenze. Der gewählte spezifische Strom bezog sich auf das Gewicht der Elektrodenbeschichtung.

**Fig. 2** zeigt die Lade- (gestrichelte Line) und Entladekapazität (durchgezogene Linie) der Elektrodenbeschichtung aus Beispiel 2 in Abhängigkeit von der Zyklenzahl bei einem Strom von 100 mA/g. Die Elektrodenbeschichtung aus **Beispiel 2** hat eine reversible Anfangskapazität von etwa 700 mAh/g und besitzt nach 100 Lade-/Entladezyklen noch ungefähr 80 % ihrer ursprünglichen Kapazität.

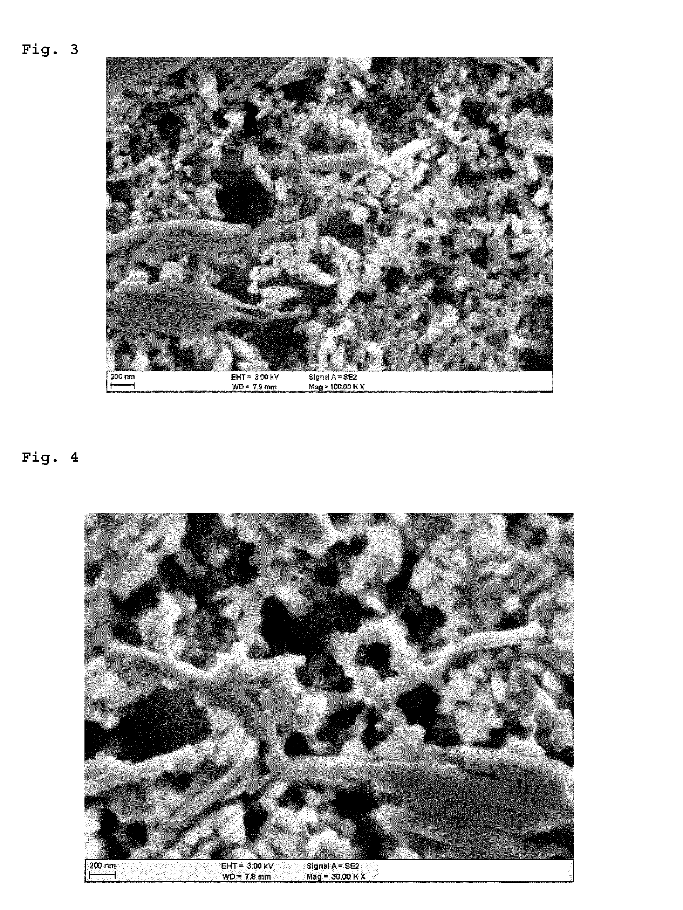

**Fig. 3** zeigt das REM-Bild des Querschnitts der Elektrodenbeschichtung aus **Beispiel 2** und **Fig. 4** das REM-Bild des Querschnitts der Elektrodenbeschichtung aus **Beispiel 2** nach dem ersten Lade-/Entladezyklus.

In allen REM-Bildern sind die splitterförmigen nanoskaligen Siliciumpartikel deutlich zu erkennen. Die Siliciumpartikel liegen auch nach dem Laden und Entladen bzw. Lithiieren und Delithiieren in nicht aggregierter Form vor.

**Beispiel 4** veranschaulicht die Herstellung von splitterförmigen nanoskaligen Siliciumpartikeln durch Mahlung.

Es wurde eine Mischung aus 2 kg Ethanol (Reinheit 99%) und 500 g eines Mahlfeinstaubs aus reinem Silicium mit einer Partikelverteilung mit d₁₀ = 8 µm, d₅₀ = 15 µm und d₉₀ = 25 µm, der mit einer Fließbettstrahlmühle aus gröberen Partikeln erzeugt wurde, hergestellt und 20 min gerührt, bis der gesamte Feststoff in der Suspension fein verteilt vorlag. Der Mahlraum einer Labor-Rührwerkskugelmühle Netzsch LabStar LS1 mit Mahlsystem ZETA Keramik wurde mit 490 ml Yttriumoxid-stabilisierten Zirkonoxid-Mahlperlen mit einem mittleren Durchmesser von 0,3 mm befüllt und verschlossen. Danach wurde die Suspension aus Siliciumstaub und Ethanol in den gekühlten Ansatzbehälter der Mühle gefüllt und mit einem Durchsatz von 40 kg/h im Kreis durch die Mühle gepumpt. Die Partikel in der Suspension wurden 245 min bei einer Mühlendrehzahl von 3000 U/min gemahlen. Die anschließende Messung der Partikelverteilung durch statische Laserstreuung mit einem Horiba LA 950 ergab eine Größenverteilung mit d₁₀ = 80 nm, d₅₀ = 150 nm und d₉₀ = 290 nm in einer stark verdünnten Suspension in Ethanol. Die REM-Aufnahmen zeigten, dass die Probe ähnlich wie in Abbildung 1 aus einzelnen, nicht aggregierten, splitterförmigen Partikeln besteht. Im Vergleich zu Beispiel 1 bietet diese Methode den Vorteil, dass größere Mengen von Si-Nanopartikeln von einigen kg bis hin zum industriellen Maßstab herstellbar sind.

**Beispiel 5** betrifft die Herstellung und Testung von Elektroden mit den splitterförmigen nanoskaligen Siliciumpartikeln aus **Beispiel 4**

Analog zu **Beispiel 2** wurden Elektroden mit den splitterförmigen nanoskaligen Siliciumpartikeln aus **Beispiel 4** hergestellt und wie in **Beispiel 3** beschrieben getestet.

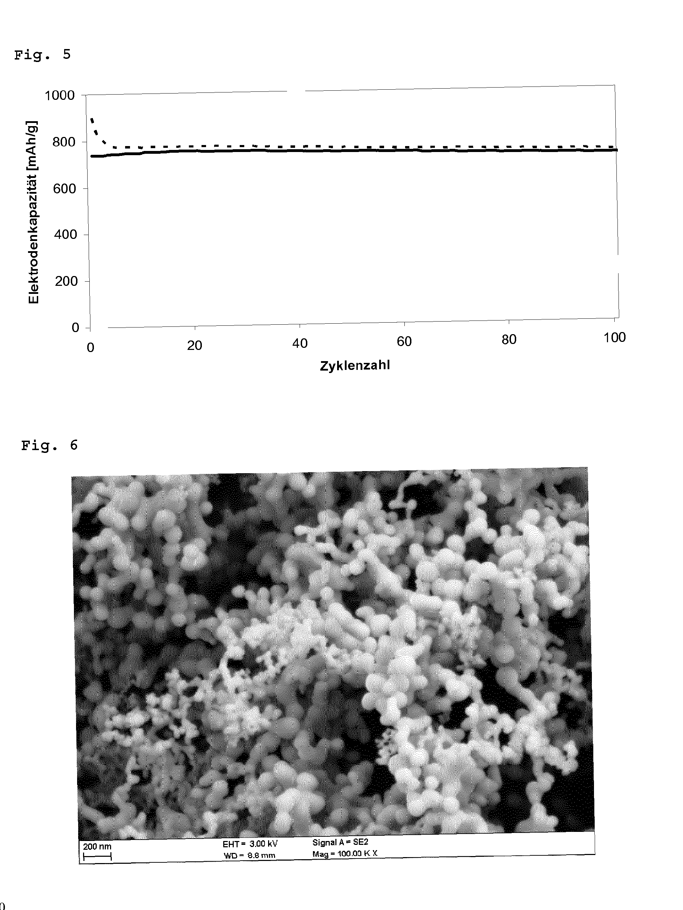

Die **Fig. 5** zeigt die Lade- (gestrichelte Line) und Entladekapazität (durchgezogene Linie) dieser Elektrodenbeschichtung mit den splitterförmigen nanoskaligen Siliciumpartikeln aus **Beispiel 4** in Abhängigkeit von der Zyklenzahl bei einem Strom von 100 mA/g.

Die Elektrodenbeschichtung mit den splitterförmigen nanoskaligen Siliciumpartikeln aus **Beispiel 4** hat eine reversible Anfangskapazität von etwa 750 mAh/g und besitzt nach 100 Lade-/Entladezyklen noch ungefähr 97 % ihrer ursprünglichen Kapazität.

Die REM-Aufnahmen zeigten ähnlich wie in **Fig. 3** und **Fig. 4****,** dass die Siliciumpartikel auch nach dem Laden und Entladen bzw. Lithiieren und Delithiieren in nicht aggregierter Form vorliegen.

**(Vergleichs-)Beispiel 6** bezieht sich auf die Herstellung und elektrochemische Charakterisierung einer Elektrodenbeschichtung mit aggregierten Siliciumpartikeln (nicht erfindungsgemäß).

0,80 g aggregierte Si-Nanopartikel mit einer Primärpartikelgröße von 20 - 30 nm (Hersteller Nanostructured & Amorphous Materials, Inc., siehe **Fig. 6****))** und 0,48 g Leitruß (Timcal, Super P Li) wurden in 24,32 g einer 1,3 Gew.%igen Lösung von Natrium-Carboxymethylcellulose (Daicel, Grade 1380) in Wasser mittels Dissolver bei einer Umlaufgeschwindigkeit von 4,5 m/s unter Kühlung bei 20°C dispergiert. Nach Zugabe von 2,41 g Graphit (Timcal, SFG6) wurde dann 45 min bei einer Umlaufgeschwindigkeit von 17 m/s gerührt. Nach Entgasen wurde die Dispersion mittels eines Filmziehrahmens mit 0,10 mm Spalthöhe (Erichsen, Modell 360) auf eine Kupferfolie (Schlenk Metallfolien, SE-Cu58) mit Dicke von 0,030 mm aufgebracht. Die so hergestellte Elektrodenbeschichtung wurde anschließend 60 min bei 80°C getrocknet. Das mittlere Flächengewicht der trockenen Elektrodenbeschichtung betrug 0,78 mg/cm2.

**Fig. 6** zeigt eine REM-Aufnahme der aggregierten Si-Nanopartikel mit einer Primärpartikelgröße von 20 - 30 nm in ca. 100.000-facher Vergrößerung.

Die Elektrodenbeschichtung mit den aggregierten Siliciumpartikeln aus **(Vergleichs-)Beispiel 6** wurde wie in **Beispiel 2** beschrieben getestet.

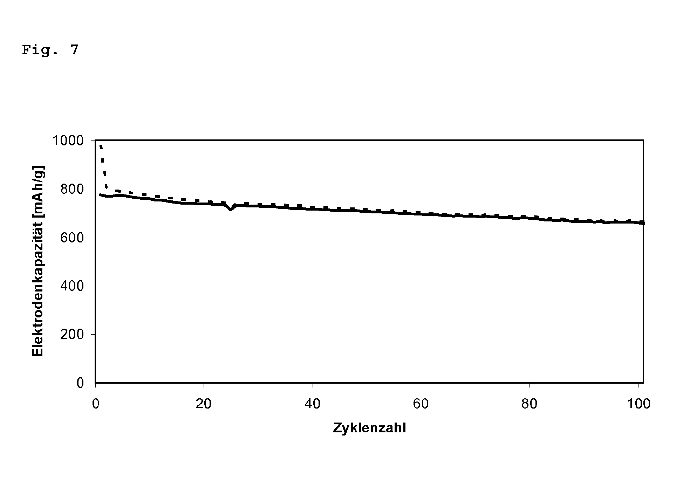

**Fig. 7** zeigt die Lade- (gestrichelte Line) und Entladekapazität (durchgezogene Linie) dieser Elektrodenbeschichtung mit den aggregierten Si-Nanopartikel mit einer Primärpartikelgröße von 20 - 30 nm aus **(Vergleichs-)Beispiel 6** in Abhängigkeit von der Zyklenzahl bei einem Strom von 100 mA/g. Die Elektrodenbeschichtung hat eine reversible Anfangskapazität von etwa 800 mAh/g und besitzt nach 100 Lade-/Entladezyklen noch ungefähr 85 % ihrer ursprünglichen Kapazität.

### Auswertung des initialen Verlusts an mobilem Lithium

In **Tabelle 1** ist der im ersten Zyklus bestimmte Verlust an mobilem Lithium der Materialien aus den **Beispielen 1, 4** und dem **(Vergleichs-)Beispiel 6** aufgeführt.

Die Materialen aus **Beispiel 1** und **4** zeichnen sich im Vergleich zum Material aus **Beispiel 6** durch einen geringeren initialen Li-Verlust aus. Dies zeigt, dass bei sonst gleicher Zusammensetzung des Elektrodenmaterials die Verwendung von nichtaggregierten Silicumpartikeln zu einem unerwarteten technischen Effekt führt.

**Tabelle 1: Initialer Verlust an mobilem Lithium**

| Material | Mittlere Partikelgröße | Initialer Li-Verlust bzgl. reversibler Kapazität |
|---|---|---|
| **Beispiel 1** | 190nm | 15% |
| **Beispiel 4** | 150nm | 18% |
| **(Vergleichs-) Beispiel 6** | 20-30nm | 21% |

## Patentansprüche

1. Elektrodenmaterial für Lithium-Ionen-Batterien, umfassend
- 5 - 85 Gew.% nanoskalige Siliciumpartikel, die Bruchflächen und eine Sphärizität von 0,3 < ψ < 0,9 aufweisen, die nicht aggregiert sind und deren volumengewichtete Partikelgrößenverteilung zwischen den Durchmesser-Perzentilen die > 20 nm und d₉₀ < 2000 nm liegt und die eine Breite d₉₀-d₁₀ < 1200 nm hat;
- 0 - 40 Gew.% einer elektrisch leitfähigen Komponente enthaltend nanoskalige Strukturen mit Ausdehnungen von kleiner als 800 nm;
- 0 - 80 Gew.% Graphitpartikel mit einer volumengewichteten Partikelgrößenverteilung zwischen den Durchmesser-Perzentilen d₁₀ > 0,2 µm und d₉₀ < 200 µm;
- 5 - 25 Gew.% eines Bindemittels;
wobei ein Anteil von Graphitpartikeln und elektrisch leitfähiger Komponente in Summe mindestens 10 Gew.% ergibt, wobei die Anteile aller Komponenten in Summe maximal 100 Gew.% ergeben.

2. Elektrodenmaterial nach Anspruch 1, wobei die nanoskaligen Siliciumpartikel mit Fremdatomen dotiert sind.

3. Elektrodenmaterial nach einem der Ansprüche 1 bis 2, wobei die nanoskaligen Siliciumpartikel an der Oberfläche kovalent angebundene organische Gruppen tragen.

4. Elektrodenmaterial nach einem der Ansprüche 1 bis 3, wobei es sich bei der elektrisch leitfähigen Komponente um Leitruß handelt, der Primärpartikel mit einer volumengewichteten Partikelgrößenverteilung zwischen den Durchmesser-Perzentilen d₁₀ > 5 nm und d₉₀ < 200 nm enthält.

5. Elektrodenmaterial nach einem der Ansprüche 1 bis 3, wobei es sich bei der elektrisch leitfähigen Komponente um Kohlenstoff-Nanoröhrchen mit einem Durchmesser von 0,4 bis 200 nm handelt.

6. Elektrodenmaterial nach einem der Ansprüche 1 bis 3, wobei die elektrisch leitfähige Komponente metallische Nanopartikel enthält.

7. Verwendung des Elektrodenmaterials nach einem der Ansprüche 1 bis 6 zur Herstellung einer Lithium-Ionen-Batterie.

8. Lithium-Ionen-Batterie, umfassend eine negative Elektrode aus einem Elektrodenmaterial nach einem der Ansprüche 1 bis 6.

## Claims

1. Electrode material for lithium ion batteries, comprising
- 5-85% by weight of nanosize silicon particles which have fracture surfaces and a sphericity of 0.3 < ψ < 0.9 and are not aggregated and whose volume-weighted particle size distribution lies between the diameter percentiles d₁₀ > 20 nm and d₉₀ < 2000 nm and has a width d₉₀-d₁₀ of < 1200 nm;
- 0-40% by weight of an electrically conductive component comprising nanosize structures having dimensions of less than 800 nm;
- 0-80% by weight of graphite particles having a volume-weighted particle size distribution between the diameter percentiles d₁₀ > 0.2 µm and d₉₀ < 200 µm ;
- 5-25% by weight of a binder;
wherein the total proportion of graphite particles and electrically conductive component is at least 10% by weight, where the proportions of all components add up to a maximum of 100% by weight.

2. Electrode material according to Claim 1, wherein the nanosize silicon particles are doped with foreign atoms.

3. Electrode material according to either Claim 1 or 2, wherein the nanosize silicon particles bear covalently bound organic groups on the surface.

4. Electrode material according to any of Claims 1 to 3, wherein the electrically conductive component is conductive carbon black containing primary particles having a volume-weighted particle size distribution between the diameter percentiles d₁₀ > 5 nm and d₉₀ < 200 nm.

5. Electrode material according to any of Claims 1 to 3, wherein the electrically conductive component is carbon nanotubes having a diameter of from 0.4 to 200 nm.

6. Electrode material according to any of Claims 1 to 3, wherein the electrically conductive component contains metallic nanoparticles.

7. Use of the electrode material according to any of Claims 1 to 6 for producing a lithium ion battery.

8. Lithium ion battery comprising a negative electrode composed of an electrode material according to any of Claims 1 to 6.

## Revendications

1. Matériau d'électrode pour des batteries à lithium-ion, comprenant
- 5-85% en poids de particules nanométriques de silicium, qui présentent des surfaces de rupture et une sphéricité de 0,3 < Ψ < 0,9, qui ne sont pas agrégées et dont la répartition granulométrique pondérée en volume est située entre les percentiles de diamètre d₁₀ > 20 nm et d₉₀ < 2000 nm et présente une largeur d₉₀-d₁₀ < 1200 nm ;
- 0-40% en poids d'un composant électroconducteur contenant des structures nanométriques de dimensions inférieures à 800 nm ;
- 0-80% en poids de particules de graphite présentant une répartition granulométrique pondérée en volume entre les percentiles de diamètre d₁₀ > 0,2 µm et d₉₀ < 200 µm ;
- 5-25% en poids d'un liant ;
une proportion des particules de graphite et du composant électroconducteur représentant, au total, au moins 10% en poids, les proportions de tous les composants valant, au total, au maximum 100% en poids.

2. Matériau d'électrode selon la revendication 1, les particules nanométriques de silicium étant dopées par des atomes étrangers.

3. Matériau d'électrode selon l'une quelconque des revendications 1 à 2, les particules nanométriques de silicium portant, sur la surface, des groupes organiques liés par covalence.

4. Matériau d'électrode selon l'une quelconque des revendications 1 à 3, le composant électroconducteur étant de la suie conductrice, qui contient des particules primaires présentant une répartition granulométrique pondérée en volume entre les percentiles de diamètre d₁₀ > 5 nm et d₉₀ < 200 nm.

5. Matériau d'électrode selon l'une quelconque des revendications 1 à 3, le composant électroconducteur étant formé de nanotubes de carbone présentant un diamètre de 0,4 à 200 nm.

6. Matériau d'électrode selon l'une quelconque des revendications 1 à 3, le composant électroconducteur contenant des nanoparticules métalliques.

7. Utilisation du matériau d'électrode selon l'une quelconque des revendications 1 à 6 pour la fabrication d'une batterie à lithium-ion.

8. Batterie à lithium-ion, comprenant une électrode négative constituée par le matériau d'électrode selon l'une quelconque des revendications 1 à 6.
